# EUROPEAN PATENT SPECIFICATION

(11) **EP 3 634 805 B1**
(45) Date of publication and mention of the grant of the patent: **27.09.2023**
(21) Application number: 18813392.0
(22) Date of filing: 02.06.2018
(51) Int. Cl.: B60P 1/44, B62K 7/04, B62K 21/18

(54) **CARGO SCOOTER 2/3 WHEELER LOAD CARRYING VEHICLE**
LASTTRAGENDES 2/3 RAD-LADEROLLERFAHRZEUG
VÉHICULE DE TRANSPORT DE CHARGE DE TYPE SCOOTER À 2/3-ROUES POUR MARCHANDISES

(30) Priority: 04.06.2017 IN 201721017841
(43) Date of publication of application: 15.04.2020
(73) Proprietor: Das, Alok, Pune, Maharashtra 411 014 (IN); K Praveen, Vijay, Bangalore, Karnataka 560 064 (IN)
(72) Inventor: Das, Alok, Pune, Maharashtra 411 014 (IN); K Praveen, Vijay, Bangalore, Karnataka 560 064 (IN)
(74) Representative: Sach, Greg Robert
(86) International application number: PCT/IN2018/050360
(87) International publication number: WO 2018/225084

(56) References cited:
- CN-U- 206 125 287
- JP-A- 2009 179 285
- Troy Turner: "The Cargo Moto", , 7 November 2014 (2014-11-07), XP055768227, Retrieved from the Internet: URL:https://www.yankodesign.com/2014/11/07 /the-cargo-moto/ [retrieved on 2021-01-25]
- F*ckmáté: "motofocker cargo-scooter by f*ckmáté from hungary", , 25 October 2016 (2016-10-25), XP055768222, Retrieved from the Internet: URL:https://www.designboom.com/project/mot ofocker-cargo-scooter/ [retrieved on 2021-01-25]
- Heather Carlsen: "motofocker cargo-scooter blends delivery truck & two-wheeler", , 25 October 2013 (2013-10-25), XP055768218, Retrieved from the Internet: URL:https://www.designboom.com/design/moto focker-cargo-scooter-blends-delivery-truck -and-two-wheeler-10-25-2013/ [retrieved on 2021-01-25]
- "MANUAL URBAN ARROW FAMILY", URBAN ARROW Manual, Version UAF-FM2017EN-0001, March 2017 (2017-03), pages 1-132, XP055560313, [retrieved on 2017-03]

## Description

### FIELD OF THE INVENTION:

This invention relates to a cargo-carrying wheeled straddle vehicle according to appended claim 1.

### BACKGROUND OF THE INVENTION:

Freight bicycles, carrier cycles, freight tricycles, cargo bikes, box bikes, or cycle-trucks are human powered vehicles designed and constructed specifically for transporting loads.

Prior art vehicle designs include a cargo area consisting of an open or enclosed box, a flat platform, or a wire basket, usually mounted over one or both wheels, low behind the front wheel, or between parallel wheels at either the front or rear of the vehicle. Typically, this cargo area is randomly placed and does not work well with the vehicle's maneuverability since a variety of moments act on these randomly aligned vehicles; especially while taking turns, causing dangerous as well as difficult maneuvers. Troy Turner: "The Cargo Mota",7 November 2014 (2014-11-07), XP055768227 discloses one of the related prior art. XP055768227 discloses the features of the preamble of claim 1.

Freight bikes are used in a variety of settings:
- Delivery services in dense urban environments;
- Food vending in high foot traffic areas (including specialist ice cream bikes);
- Transporting trade tools, including around large installations such as power stations and CERN;
- Airport cargo handling;
- Recycling collections;
- Warehouse inventory transportation;
- Mail delivery.

These freight bikes are human powered and cannot be used for carrying heavy weight and are also slow due to human effort needed.

Therefore, there is a need for a vehicle or a class of vehicle to make cargo carrying, especially, at last mile, easy and efficient, such vehicle or class of vehicle, preferably, being a two-wheeler vehicle.

### OBJECTS OF THE INVENTION:

An object of the invention is to overcome the current problems involved in freight bikes or cargo scooters.

Another object of the invention is to provide a frame for a cargo scooter which also acts as a load carrying space.

Yet another object of the invention is to maximize the utilization of storage compartment in a freight bike or a cargo scooter.

Still another object of the invention is to provide modularity in the storage compartment, providing channels for installing drawers, in a freight bike or a cargo scooter.

An additional object of the invention is to provide ease of handling of freight bikes or cargo scooters even whilst having a large load carrying space.

Another additional object of the invention is to provide easily maneuverable freight bikes or cargo scooters even whilst having a large load carrying space. Yet another object of the invention is to provide a rather stable freight bikes or cargo scooters even whilst having a large load carrying space.

### SUMMARY OF THE INVENTION:

According to this invention, there is provided a cargo-carrying wheeled vehicle comprising the features of the appended claims.

### BRIEF DESCRIPTION OF THE ACCOMPANYING DRAWINGS:

This invention is now described in relation to the accompanying drawings in which:
   Figures 1, 2, 3, and 4 illustrate various views of the cargo-carrying vehicle;
   Figures 5 and 6 illustrate views representing the transfer mechanism from a steering handle to a front wheel;
   Figure 7 illustrates a first locus of points configured to contain the cargo-carrying vehicle's centre of gravity; and
   Figure 8 illustrates a second locus of points configured to contain the cargo-carrying vehicle's centre of gravity.

### DETAILED DESCRIPTION OF THE ACCOMPANYING DRAWINGS:

According to this invention, there is provided a **cargo-carrying wheeled vehicle.**

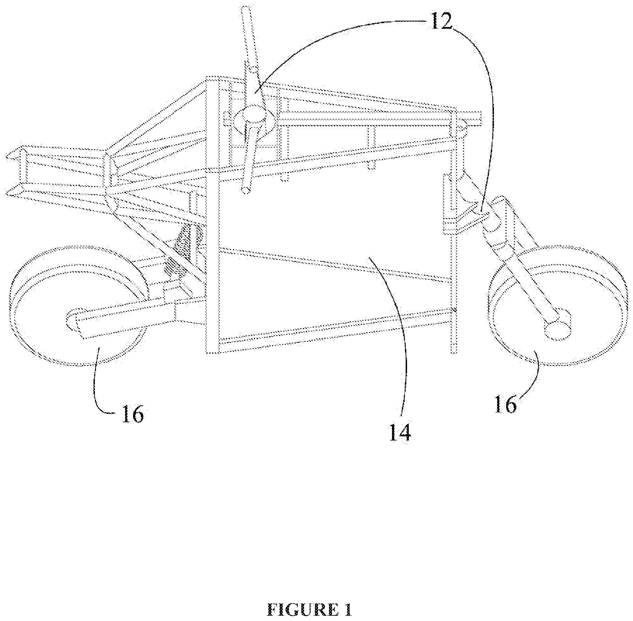

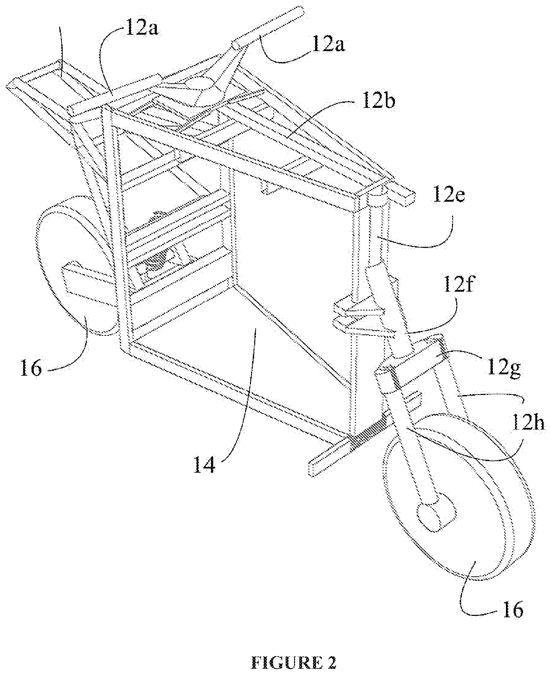

Figures 1, 2, 3, and 4 illustrate various views of the cargo-carrying vehicle.

The vehicle is designed to provide a solution for the last mile delivery which is presently carried out using existing scooters or motorcycles which are not functionally and ergonomically designed for the last mile delivery. The scooter is specifically designed to carry cargo so that users can conveniently transport items such as groceries, children, food deliveries, warehouse items, etc. At the same time, through its simple cargo-focused design, the vehicle offers more utility for local transportation needs, at far less cost, with less maintenance than existing bicycles, tricycles, and kick scooters.

In at least an embodiment, this vehicle is defined in terms of at least a **seat assembly (18),** at least a **steering assembly (12),** at least a **cargo hold chassis (14),** and at least a **set of wheels (16).**

**Figures 1****,** **2****,** **3****, and** **4** illustrate various views of the cargo-carrying vehicle.

In at least an embodiment of this vehicle, the set of wheels comprise at least **two wheels (16)** with substantially parallel angular displacement axes with respect to each other. Furthermore, the riding wheels arrange substantially along the same line so that it can lean into turns, lean when riding on angled unlevelled surfaces (relative to the angled unlevelled surface), and lean when parked. By being able to lean, the vehicle is more stable when riding at higher speeds and less tip prone than competing products that do not lean.

In at least an embodiment of this vehicle, the **cargo hold chassis (14)** is a framework. This chassis is located in front of the seat assembly of this vehicle. In other words, the operative longitudinal axis of the seat is spaced apart from the operative longitudinal axis of the cargo hold chassis, in that the operative longitudinal axis of the seat is located operatively behind the operative longitudinal axis of the cargo hold chassis. The provisioning of the cargo hold chassis in an operative front part with respect to the seat largely exaggerates the storage area when compared with existing solutions for carrying cargo in wheeled vehicles, especially in two-wheeled vehicles or in three-wheeled vehicles.

In at least an embodiment, the cargo hold chassis has a volume more than 50,000 cubic cm.

In at least an embodiment, the structural members of the chassis are formed using pressed steel sheets or tubular pipes or cast alloys. The operative front part of the chassis is maintained relatively lighter and the operative rear part of the chassis is maintained relatively heavier by using heavier frame members or by adding the batteries below the rider seat or by having the rear biased chassis where the cargo weight acts on the rear half portion of the chassis shifting the centre of gravity towards the rider or by using dead weight or by using a taller front suspension which increase the height of the vehicle from the front.

In at least an embodiment, the batteries can be installed in the floor of the cargo hold chassis.

The rear biased chassis is achieved by sloping the base of the cargo hold area from the operative front wheel towards the operative rear wheel. In other words, the chassis comprises an operative front side which is relatively higher from the ground than an operative back side which is relatively lower from the ground. Also, operative front side or front half of said cargo hold is relatively lighter than the operative back side or back half of said cargo hold. This ensures that moment acting on the vehicle will be relatively lesser. This also ensures that the vehicle is easily maneuverable through its steering handle.

The frame of this vehicle can be constructed using round or rectangular or polygonal or square cross section tubes of aluminum or steel or polymer or any high strength material to carry load, where the frame is designed with storage compartment of at least 50,000 cubic cm. The frame, of the chassis, can be modified for providing enclosed space by providing doors for different utilities. The doors can be constructed using thermally insulated walls for carrying food, medicines, and supplies. An onboard refrigeration system could be provided for cooling or heating the storage compartment, where the refrigeration system is powered by main vehicle battery or secondary batteries or ground power or onboard generator on the vehicle. In another embodiment, the frame can be added with racks and drawers for storage bins. In any of the above embodiments, an illumination or safety system can be installed where the opening of any door leads to any form of visual and audible indication of door opening.

In at least an embodiment this cargo hold chassis is a rearward bias chassis, in that, the chassis slopes towards the rear wheel(s) of this vehicle.

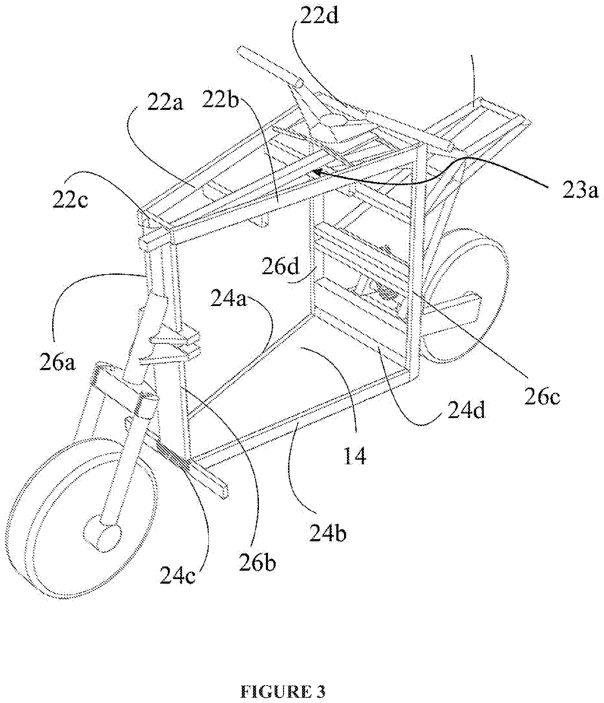

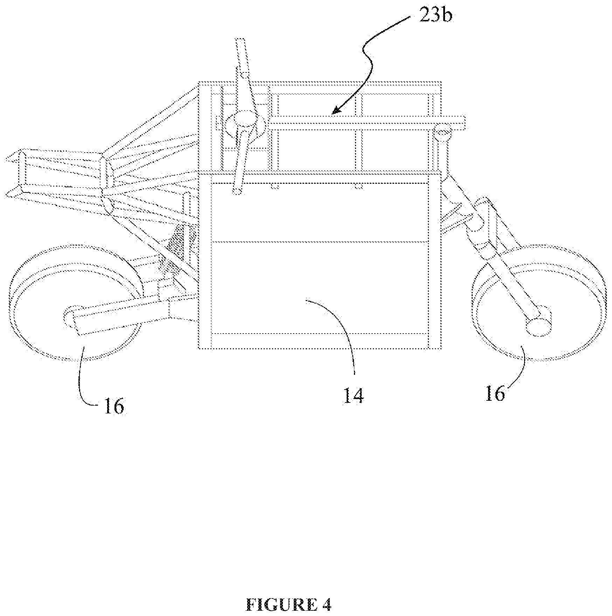

Typically, the chassis comprises at least two top longitudinal members (22a, 22b) configured along axis of travel of the vehicle and at least two top lateral members (22c, 22d) configured orthogonal to the axis of travel of the vehicle. In at least an embodiment, the two top longitudinal members and the two top lateral members form a top portion of the chassis. In at least an embodiment, the two top longitudinal members and the two top lateral members form a trapezoid (reference numeral 23a of Figure 3). In at least another embodiment, the two top longitudinal members and the two top lateral members form a rectangle (reference numeral 23b of Figure 4). The at least two top longitudinal and the at least two top lateral members are joined together using known joining techniques like welding or bolts.

In at least an alternative embodiment, the two top longitudinal members and the two top lateral members form a polygonal.

Typically, the chassis comprises at least two bottom longitudinal members (24a, 24b) configured along axis of travel of the vehicle and at least two bottom lateral members (24c, 24d) configured orthogonal to the axis of travel of the vehicle. In at least an embodiment, the two bottom longitudinal members and the two bottom lateral members form a bottom portion of the chassis. In at least an embodiment, the two bottom longitudinal members and the two bottom lateral members form a trapezoid. In at least another embodiment, the two bottom longitudinal members and the two bottom lateral members form a rectangle. The at least two bottom longitudinal and the at least two bottom lateral members are joined together using known joining techniques like welding or bolts.

Typically, the top portion of the chassis is spaced apart from the bottom portion of the chassis by means of operative vertical members (26a, 26b, 26c, 26d). These members may be made of tubes having cross-sections which are circular, rectangular, polygonal, or the like.

These twelve members, when assembled, form a storage space which can be modified to suit different requirements like carrying cargo load, fire tender, last mile deliveries, and the like. The storage space is located relatively lower to enable lowering the center of gravity of vehicle when the vehicle is fully loaded.

The rear end of the cargo hold chassis comprises a sub-frame which could be bolted or welded to the frame assembly. This sub-frame is constructed using trellis type for seating of a rider. The sub-frame is mounted at a height suitable as per the anthropometric data of the region of use. The sub-frame comprises at least two members constructed using circular or rectangular or polygonal tubes or alloys. The sub-frame is designed to carry rider load above 30kgs. The rear end of the cargo hold chassis comprises a pivot point for swing arm and a suspension, wherein the suspension can be mono-shock or dual-shock.

The top face of cargo hold chassis comprises arrangement for steering mechanism.

The chassis comprises members to increase rigidity and load carrying capacity.

The chassis may comprise shelves or modular racks configured to have variable or multiple heights of shelves or racks in the cargo hold area.

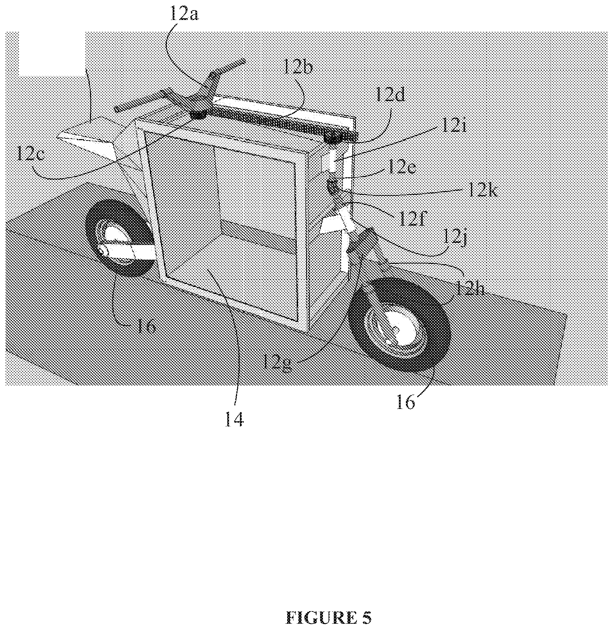

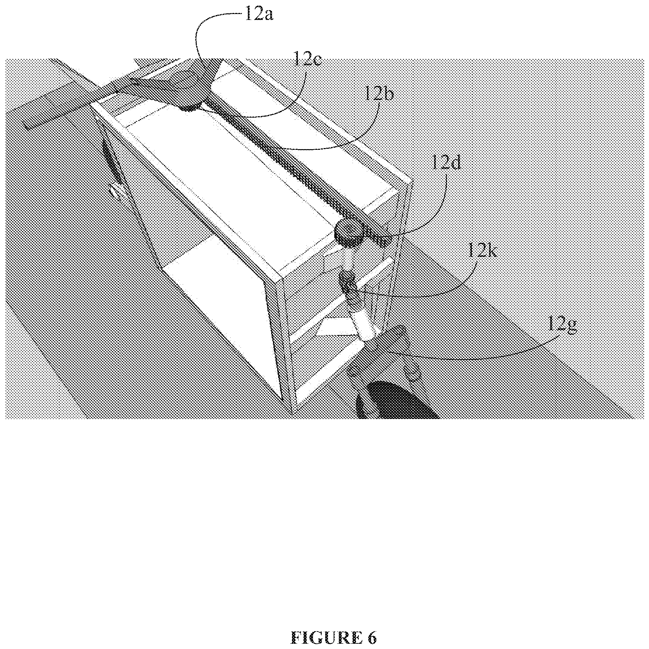

**Figures 5** **and** **6** illustrate views representing the transfer mechanism from a steering handle to a front wheel.

In at least an embodiment of this vehicle, the **steering assembly (12)** is an offset steering assembly. The steering handle of the steering assembly is offset from the longitudinal axis of the operative front wheel of the set of wheels of this vehicle. Since the cargo hold chassis is located between the operative front wheel and the seat of this vehicle, it is impossible to have the steering handle in line with the front wheel. Therefore, the offset displacement is requirement. However, it is also important so as to not to incorporate a newer learning experience of a newer learning curve for a rider. In other words, it is important that the comfort and experience of the rider remain the same even whilst handling this differently configured vehicle and even while maneuvering this vehicle with cargo loaded in the cargo hold chassis.

A steering assembly is defined to include a steering handle (12a), a rack (12b), a first pinion (12c), a second pinion (12d) , a universal joint (12k), a first steering rod (12e), a second steering rod (12f), a first steering column (12i), a second steering column (12j), a Handle T (12g), and a telescopic front suspension (12h). In at least an embodiment, at least a front wheel is mounted onto the chassis. The mounting can include suspensions, therebetween. The telescopic suspension is mounted into the handle T which is connected to the second steering rod, located in place by the second steering column clamping the second steering rod to the chassis, where the second steering rod is connected to the universal joint. The first steering rod is clamped in place by the first steering column connected to the chassis. The universal joint, at its operative upper side, receives the first steering rod. The universal joint, at its operative lower side, receives the second steering rod which further extends in to a Handle T which further splits into two suspensions on either side of the front wheel.

The first steering rod, at its operative upper end, is coupled to a second pinion of the rack and pinion mechanism. The rack is coupled to a first pinion at its steering handle end and is coupled to a second pinion at is steering rod and steering column end. The steering handle is laterally offset (spaced apart) from the first steering rod.. The rack is mounted in line with direction of motion of the vehicle. The rack can also be at an angle to the motion of the vehicle. The first pinion is concentric to the steering handle's angular displacement axis.

The base of the steering assembly comprises a first pinion gear aligned, and concentric, to the angular displacement axis of the steering handle. This first pinion gear is engaged to one end of a rack element. This rack element is aligned along the axis of travel of the vehicle. The rack element could be parallel to a road surface or at an angle based on the space availability on the chassis.

The steering assembly, as described above, can also be used with a combination of different gear types such as spur gear, bevel gear mechanism, sun and planetary gear mechanism, rack gear mechanism, cable and pulley mechanism, tie rods mechanism, worm and worm gear and rack mechanism, chain and sprocket mechanisms, and the like gears known to person skilled in art.

The front end of the frame assembly comprises two steering rods. The first steering rod and the second steering rod are at an angle to each other.

The other end of the rack element is engaged with the second pinion gear. The second pinion gear is coupled to the first steering rod which is further coupled to the second steering rod by means of a universal joint and further extends to the front wheel which is steered by the steering handle. The other end of the universal joint is fixed on the Handle T. The second steering rod is fixed at an angle to first steering rod. The angle of second steering rod defines the rake angle of the front suspension. The rake angle could be from 20 degrees to 40 degrees depending on vehicle dynamics' requirements. The Handle T can move freely in the second steering rod column using grease or bearings. The Handle T is fixed with telescopic suspension.

As the steering handle is angularly displaced, the corresponding first pinion gear angularly displaces itself. This causes the rack element to be either pulled towards the rider or pushed away from the rider depending on clockwise or anticlockwise angular displacement of the steering handle. Correspondingly, the second pinion angularly displaces, in corresponding clockwise or anticlockwise angular displacement, and causes its angular displacement to be effected on to communicably coupled first rod which, in turn, causes it to be effected on to communicably coupled second rod, through the intermitted universal joint. This causes the Handle T to be correspondingly angularly displaced and the front wheel to be correspondingly steered.

The movement of steering handle angularly displaces the first pinion gear, which provides a sliding / reciprocating motion to the rack. The rack turns the second pinion gear which angularly displaces the first steering rod. The first steering rod transfers the angular displacement motion to a second steering rod, through the universal joint which, in turn, transfers its angular displacement motion to the Handle T. The Handle T's angular displacement is used for steering the vehicle.

In another embodiment a steering damper is added to avoid shimmy of the steering assembly. The steering damper could be mechanical, pneumatic, or hydraulic. The steering damper is attached to rack or pinion gears or steering rod by welding or using nuts or bolts.

The first and second pinion gear may not be needed to be complete 360 degrees circular. The rack and pinion gears could be of spur type or helical type or worm type or bevel type.

In another embodiment, the rack and pinion mechanism could be replaced with a four-bar linkage mechanism with similar steering rod, steering column, first and second handle, Handle T, and the like mechanisms or elements.

Shock absorbers may be hydraulic or pneumatic dampers for steering, monoshock, or dual suspension set up in rear, telescopic suspension, or other such suspensions.

The vehicle uses compression ignition engine or spark ignition engine or electric motor or on board battery system or fuel cell system or combinations, thereof.

It is to be understood that the wheels at the front as well as at the back may be plural in number as well as unequal to each other.

In at least an embodiment, the vehicle is constructed using round or rectangular or rounded rectangular or polygonal or square cross section tubes of aluminum or steel or polymer or any high strength material to carry load, with forward bias or rear bias design to help in 50-50% or 60-40% or 40-60% or 70%-30% weight distribution on front and rear wheels.

Rear wheels may be power or front wheels may be powered or both front wheels and rear wheels may be powered.

In at least an embodiment of this vehicle, the front wheel has in-wheel generator for generating electrical energy to be stored in a battery and / or for driving an in-wheel motor in the rear wheels or vice versa.

In at least an embodiment of this vehicle, the vehicle comprises onboard electronics with sensors such as a Gyroscope or inclinometers to measure the tilt of vehicle, load sensors to measure the load in storage compartment to provide information on display about loading limits of the vehicle, vehicle speed sensor for informing rider and corresponding fuel or battery consumption and distance to empty, temperature sensor for indicating battery temperature to avoid damage to batteries by deactivating the vehicle in case of higher temperature, main stand indication sensor for deactivating motor / engine in case the vehicle is parked on main stand, micro unbalanced motor / vibrator attached to chassis or seat or steering handle for inducing vibration to indicate the engine / motor active mode, where the unbalanced motor / vibrator deactivates as the vehicle goes in motion. In another embodiment, the onboard battery on this vehicle is made user replaceable to swap the exhausted battery with charged battery in less than 10 seconds.

In cases of prior art, the centre of gravity shifts towards the front wheel(s) when the vehicle is substantially loaded with cargo in the cargo hold chassis and with a rider on the seat assembly of this vehicle. This would cause difficulty in maneuverability as the centre of gravity would apply a moment (force) in a direction opposite to the vehicle, of the prior art, while turning the vehicle of the prior art. Also, the vehicle, of the prior art, would be difficult to control in cases of emergency braking as the centre of gravity, of the prior art vehicle, would cause to effect excessive force on front suspension and front wheel; thereby making the steering assembly very heavy and causing the front wheel to skid or slip. The possibility of lack of control would cause safety concerns at speed above 20 km/h in emergency situations.

In contrast, in at least an embodiment, in terms of centre(s) of gravity, the centre of gravity of the entire vehicle is a function of design as well as of weight distribution. The cargo-hold chassis is designed to shift the centre of gravity, of the payload / cargo, in the vehicle of the current invention, towards the rear wheel(s) which, in turn, results in keeping the front wheel(s) relatively lighter; thereby, enabling ease of handling and maneuverability.

Centre of gravity is defined in the following conditions:
1) No rider and no load condition;
2) With rider and with load condition;
3) With rider and no load condition.

In all circumstances the centre of gravity would lie in a pre-defined triangular region - where the 3 coordinates are: 1) steering handle axis; 2) rear axle; and 3) imaginary line passing through the centre of the wheelbase intersecting the bottom part of the chassis.

In at least an embodiment, the centre of gravity is defined by a first locus of points limited, at an operative front side, by a central axis, of the wheelbase, and a second locus of points limited, at an operative back side, by the leg of a rider on the seat of the vehicle.

Centre of gravity is operatively forward with respect to a rider.

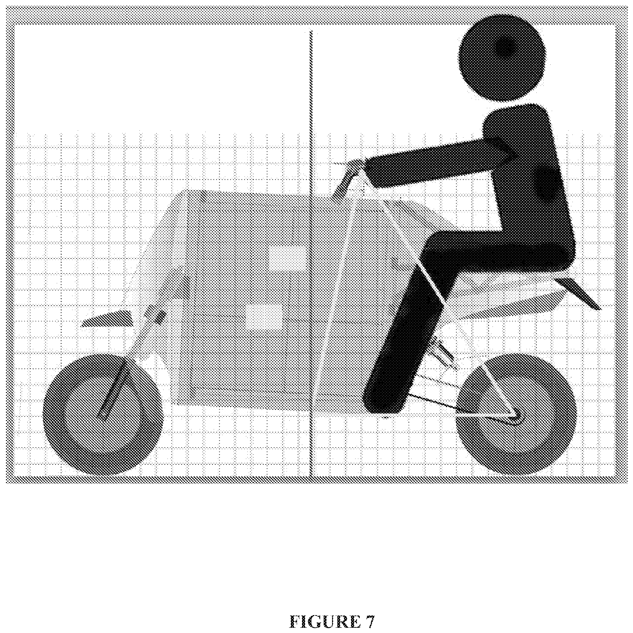

**Figure 7** illustrates a first locus of points (first triangle) configured to contain the cargo-carrying vehicle's centre of gravity.

The centre of gravity is defined within a first triangle, in an x-plane and a y-plane. The centre of gravity's first triangle is defined by a point on the rear axle, a point on the steering handle, and either a point on the front-most point of the cargo hold chassis.

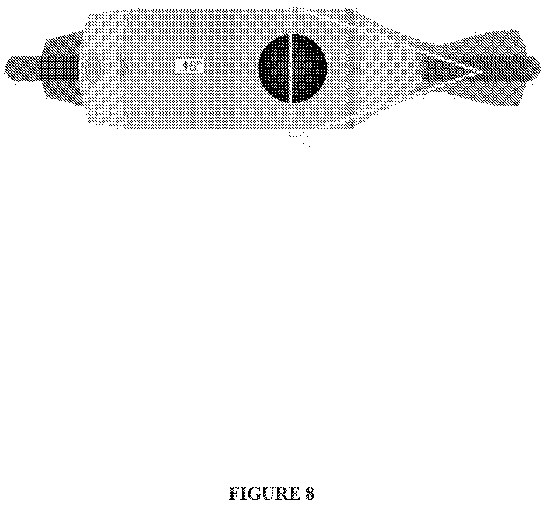

**Figure 8** illustrates a second locus of points (second triangle) configured to contain the cargo-carrying vehicle's centre of gravity.

The centre of gravity is defined within a second triangle, in a z-plane. The centre of gravity's second triangle is defined by a point on one extremity of the steering handle, a point on the other extremity of the steering handle, and a point on the rear axle.

In at least an embodiment, it is important that the centre of gravity is relatively lower. Weight in the cargo hold chassis assists in the lowering the centre of gravity.

In at least an embodiment, a vibrating motor is placed in the handle of the vehicle, the vibrating motor being coupled with a motor that drives the vehicle, in that, if the motor is on, the vibrating motor is on and if the motor is off, the vibrating motor is off. This is to enable a rider to determine if the vehicle ignition is on or note.

In at least an embodiment, a load cell is placed at the base of the cargo hold chassis to make a rider aware of the load of cargo in / on the vehicle. This is communicably coupled with ignition so that in overload conditions, the vehicle should not operate.

In at least an embodiment, the steering handle is located close to the line of centre of gravity under loaded as well as unloaded conditions.

In at least an embodiment, the steering handle is located before or at with respect to the central longitudinal axis of the vehicle.

In at least an embodiment, the cargo hold chassis may comprise a vacuum cleaner, advantageously fitted.

In at least an embodiment, the cargo hold chassis may comprise a power generation unit, advantageously fitted configured to provide onboard power generation unit for supplying power to secondary power consumer. E.g. charging car battery, charging other electric vehicles, providing power to traffic lights, power supply during natural calamities, displays or PA systems for announcement or branding promotions wherein the cargo hold chassis doors are made up of display panels.

In at least an embodiment, the cargo hold chassis may provide space for fixing paramedics' equipment such as portable and fixed suction apparatus with a regulator, portable and fixed oxygen supply equipment, pulse oximeter with paediatric and adult probes, portable, battery operated defibrillator, nebulizer, and the like equipment.

In at least an embodiment, the cargo hold chassis may comprise doors wherein the body panel and / or the doors are thermally insulated.

The **TECHNICAL ADVANCEMENT** of this invention lies in providing a vehicle with a substantially larger cargo-hold chassis located operatively forward with respect to a rider. The vehicle is designed as a function of centre of gravity and weight distribution so that maneuverability is easy and so that the vehicle does not wheelie in loaded as well as in non-loaded conditions.

## Claims

1. A cargo-carrying 2 or 3 wheeled straddle vehicle, comprising:
- a seat assembly (18);
- a set of wheels (16) comprising at least a front wheel and at least a rear wheel;
- a cargo hold chassis (14) being a framework located in front of said seat assembly (18), wherein said seat assembly (18) is spaced apart from said cargo hold chassis (14), in that said seat assembly (18) is located operatively behind said cargo hold chassis (14); and a steering assembly (12), on top of said cargo hold chassis (14), said steering assembly (12) being provided in a spaced apart formation, in that, a steering handle (12a) is being laterally offset from said front wheel, wherein,
- the angularly displaceable steering handle (12a), is capable of an angular displacement about said steering handle's (12a) operative longitudinal axis; **characterised in that** said steering assembly (12) comprises:
- a first pinion (12c) aligned, and concentric, to angular displacement axis of said steering handle (12a);
- a second pinion (12d);
- a rack (12b) coupled to said first pinion (12c) at its one end and to said second pinion (12d) at its other end;
- a first steering rod (12e), laterally offset from said steering handle (12a), clamped by a first steering column (12i), said first steering rod (12e) being coupled to said second pinion (12d);
- a second steering rod (12f) clamped by a second steering column (12j), said first steering rod (12e) and said second steering rod (12f) being mounted at an angle with respect to each other;
- a universal joint (12k) configured to couple said first steering rod (12e) to said second steering rod (12f);
- a handle T (12g) connected to said second steering rod (12f); and
- a telescopic front suspension (12h) mounted on said handle T (12g).

2. The cargo-carrying 2 or 3 wheeled straddle vehicle as claimed in claim 1, wherein said cargo hold chassis has a base of said cargo hold area which slopes from the operative front wheel towards the operative rear wheel

3. The cargo-carrying 2 or 3 wheeled straddle vehicle as claimed in claim 1, wherein said cargo hold chassis comprising:
- at least two top longitudinal members (22a, 22b) configured along axis of travel of the vehicle and at least two top lateral members (22c, 22d) configured orthogonal to the axis of travel of the vehicle, the two top longitudinal members and the two top lateral members form a top portion of the chassis;
- at least two bottom longitudinal members (24a, 24b) configured along axis of travel of the vehicle and at least two bottom lateral members (24c, 24d) configured orthogonal to the axis of travel of the vehicle, the two bottom longitudinal members and the two bottom lateral members form a bottom portion of the chassis; and
- the top portion of the chassis is spaced apart from the bottom portion of the chassis by means of operative vertical members (26a, 26b, 26c, 26d);
wherein, the two top longitudinal members and the two top lateral members form a trapezoid (23a) or a rectangle (23b).

4. The cargo-carrying 2 or 3 wheeled straddle vehicle as claimed in claim 1, wherein said steering handle of said steering assembly is offset from a longitudinal axis of said operative front wheel of the set of wheels.

5. The cargo-carrying 2 or 3 wheeled straddle vehicle as claimed in claim 1, wherein said rack is aligned along the axis of travel of said vehicle.

6. The cargo-carrying 2 or 3 wheeled straddle vehicle as claimed in claim 1, wherein centre of gravity, of said vehicle, is operatively forward with respect to a rider, said centre of gravity lies in a pre-defined triangular region - where the 3 vertices are: 1) point on steering handle axis; 2) point on rear axle; and 3) point on an imaginary line passing through the centre of the wheelbase intersecting the bottom part of the chassis.

7. The cargo-carrying 2 or 3 wheeled straddle vehicle as claimed in claim 1, wherein centre of gravity, of said vehicle, is operatively forward with respect to a rider, said centre of gravity is defined by a first locus of points limited, at an operative front side, by a central axis, of the wheelbase, and a second locus of points limited, at an operative back side, by the leg of a rider on the seat of the vehicle.

8. The cargo-carrying 2 or 3 wheeled straddle vehicle as claimed in claim 1, wherein centre of gravity, of said vehicle, is operatively forward with respect to a rider, said centre of gravity is defined within a first triangle, in an x-plane and a y-plane, said centre of gravity's first triangle is defined by a point on the rear axle, a point on the steering handle, and either a point on the front-most point of the cargo hold chassis.

9. The cargo-carrying 2 or 3 wheeled straddle vehicle as claimed in claim 1, wherein centre of gravity, of said vehicle, is operatively forward with respect to a rider, said centre of gravity is defined within a second triangle, in a z-plane; or **characterized in that**, said centre of gravity is defined within a second triangle, in a z-plane, said centre of gravity's second triangle being defined by a point on one extremity of the steering handle, a point on the other extremity of the steering handle, and a point on the longitudinal axis of the rear axle.

10. The cargo-carrying 2 or 3 wheeled straddle vehicle as claimed in claim 1, wherein centre of gravity, of said vehicle, is operatively forward with respect to a rider, said centre of gravity is defined within a second triangle, in a z-plane, said centre of gravity's second triangle being defined by a point on one extremity of the lateral axis defined at the centre of the vehicle's wheelbase, a point on the other extremity of the lateral axis defined at the centre of the vehicle's wheelbase, and a point on the longitudinal axis of the rear axle.

11. The cargo-carrying 2 or 3 wheeled straddle vehicle as claimed in claim 1, wherein said steering handle is located close to a line of centre of gravity under loaded as well as unloaded conditions, said steering handle being located before or at with respect to a central longitudinal axis of the wheelbase.

## Patentansprüche

1. Ein 2- oder 3-rädriges Aufsitzfahrzeug zum Lastentransport bestehend aus:
- eine Sitzbaugruppe (18);
- einen Radsatz (16), der mindestens ein Vorderrad und mindestens ein Hinterrad umfasst;
- ein Frachtraumgehäuse (14), bei dem es sich um einen Rahmen handelt, der sich vor der Sitzbaugruppe (18) befindet, wobei die Sitzbaugruppe (18) von dem Frachtraumgehäuse (14) beabstandet ist, und zwar dadurch, dass die Sitzbaugruppe (18) betriebsmäßig hinter dem Frachtraumgehäuse (14) angeordnet ist; und
eine Lenkbaugruppe (12) oben auf dem Frachtraumgehäuse (14), wobei die Lenkbaugruppe (12) in einer beabstandeten Anordnung vorgesehen ist, wobei ein Lenkgriff (12a) seitlich vom Vorderrad versetzt ist, wobei ,
- der winkelverstellbare Lenkgriff (12a) ist zu einer Winkelverschiebung um die operative Längsachse des Lenkgriffs (12a) in der Lage; **dadurch gekennzeichnet, dass** die Lenkbaugruppe (12) umfasst:
- ein erstes Ritzel (12c), das zur Winkelverschiebungsachse des Lenkgriffs (12a) ausgerichtet und konzentrisch dazu ist;
- ein zweites Ritzel (12d);
- eine Zahnstange (12b), die an ihrem einen Ende mit dem ersten Ritzel (12c) und an ihrem anderen Ende mit dem zweiten Ritzel (12d) gekoppelt ist;
- eine erste Lenkstange (12e), seitlich versetzt zum Lenkgriff (12a), festgeklemmt durch eine erste Lenksäule (12i), wobei die erste Lenkstange (12e) mit dem zweiten Ritzel (12d) gekoppelt ist;
- eine zweite Lenkstange (12f), die von einer zweiten Lenksäule (12j) geklemmt wird, wobei die erste Lenkstange (12e) und die zweite Lenkstange (12f) in einem Winkel zueinander montiert sind;
- ein Universalgelenk (12k), das so konfiguriert ist, dass es die erste Lenkstange (12e) mit der zweiten Lenkstange (12f) verbindet;
- einen Griff T (12g), der mit der zweiten Lenkstange (12f) verbunden ist; und
- eine teleskopische Vorderradaufhängung (12h), die am Griff T (12g) montiert ist.

2. Das 2- oder 3-rädriges Aufsitzfahrzeug zum Lastentransport nach Anspruch 1, wobei das Frachtraumgehäuse eine Basis des Frachtraumbereichs aufweist, die vom aktiven Vorderrad zum aktiven Hinterrad hin abfällt.

3. Das 2- oder 3-rädriges Aufsitzfahrzeug zum Lastentransport nach Anspruch 1, wobei das Frachtraumgehäuse Folgendes umfasst:
- mindestens zwei obere Längsträger (22a, 22b), die entlang der Fahrtachse des Fahrzeugs angeordnet sind, und mindestens zwei obere Querträger (22c, 22d), die orthogonal zur Fahrtachse des Fahrzeugs angeordnet sind, wobei die beiden oberen Längsträger und die zwei obere seitliche Elemente einen oberen Teil des Fahrgestells bilden;
- mindestens zwei untere Längsträger (24a, 24b), die entlang der Fahrtachse des Fahrzeugs angeordnet sind, und mindestens zwei untere Querträger (24c, 24d), die orthogonal zur Fahrtachse des Fahrzeugs angeordnet sind, wobei die beiden unteren Längsträger und die zwei untere seitliche Elemente einen unteren Teil des Fahrgestells bilden; und
- der obere Teil des Fahrgestells ist durch wirksame vertikale Elemente (26a, 26b, 26c, 26d) vom unteren Teil des Fahrgestells beabstandet;
wobei die beiden oberen Längsträger und die beiden oberen Querträger ein Trapez (23a) oder ein Rechteck (23b) bilden.

4. Das 2- oder 3-rädriges Aufsitzfahrzeug zum Lastentransport nach Anspruch 1, wobei der Lenkgriff der Lenkbaugruppe von einer Längsachse des betriebsfähigen Vorderrads des Radsatzes versetzt ist.

5. Das 2- oder 3-rädriges Aufsitzfahrzeug zum Lastentransport nach Anspruch 1, wobei die Zahnstange entlang der Fahrachse des Fahrzeugs ausgerichtet ist.

6. Das 2- oder 3-rädriges Aufsitzfahrzeug zum Lastentransport nach Anspruch 1, wobei der Schwerpunkt des Fahrzeugs in Bezug auf einen Fahrer betriebsmäßig vom liegt und der Schwerpunkt in einem vordefinierten dreieckigen Bereich liegt - wobei dies die 3 Eckpunkte sind: 1) Punkt auf der Lenkgriffachse; 2) Punkt an der Hinterachse; und 3) Punkt auf einer imaginären Linie, die durch die Mitte des Radstands verläuft und den unteren Teil des Fahrgestells schneidet.

7. Das 2- oder 3-rädriges Aufsitzfahrzeug zum Lastentransport nach Anspruch 1, wobei der Schwerpunkt des Fahrzeugs in Bezug auf einen Fahrer betriebsmäßig vom liegt und der Schwerpunkt durch einen ersten Ort von begrenzten Punkten auf der operativen Vorderseite definiert ist, durch eine Mittelachse des Radstands, und durch einen zweiten Ort von Punkten, der an einer operativen Rückseite durch das Bein eines Fahrers auf dem Sitz des Fahrzeugs begrenzt wird.

8. Das 2- oder 3-rädriges Aufsitzfahrzeug zum Lastentransport nach Anspruch 1, wobei der Schwerpunkt des Fahrzeugs in Bezug auf einen Fahrer betriebsmäßig vom liegt und der Schwerpunkt innerhalb eines ersten Dreiecks in einer x-Ebene und einer y-Ebene definiert ist. Das erste Dreieck des Schwerpunkts wird durch einen Punkt an der Hinterachse, einen Punkt am Lenkgriff und einen Punkt am vordersten Punkt des Frachtraumgehäuses definiert.

9. Das 2- oder 3-rädriges Aufsitzfahrzeug zum Lastentransport nach Anspruch 1, wobei der Schwerpunkt des Fahrzeugs in Bezug auf einen Fahrer betriebsmäßig vom liegt und der Schwerpunkt innerhalb eines zweiten Dreiecks in einer z-Ebene und einer y-Ebene der **dadurch gekennzeichnet, dass** der Schwerpunkt innerhalb eines zweiten Dreiecks in einer z-Ebene definiert ist, wobei das zweite Dreieck des Schwerpunkts durch einen Punkt an einem Ende des Lenkgriffs und einen Punkt am anderen Ende des Lenkgriffs und einem Punkt auf der Längsachse der Hinterachse definiert ist.

10. Das 2- oder 3-rädriges Aufsitzfahrzeug zum Lastentransport nach Anspruch 1, wobei der Schwerpunkt des Fahrzeugs in Bezug auf einen Fahrer betriebsmäßig vom liegt und der Schwerpunkt innerhalb eines zweiten Dreiecks in einer Ebene und einer z-Ebene definiert ist, wobei das zweite Dreieck des Schwerpunkts durch einen Punkt an einem Ende der Querachse in der Mitte des Radstands des Fahrzeugs, einen Punkt am anderen Ende der Querachse der Mitte des Radstands des Fahrzeugs, und einen Punkt auf der Längsachse der Hinterachse definiert ist.

11. Das 2- oder 3-rädriges Aufsitzfahrzeug zum Lastentransport nach Anspruch 1, wobei sich der Lenkgriff sowohl im beladenen als auch im unbeladenen Zustand in der Nähe einer Schwerpunktlinie befindet, wobei sich der Lenkgriff vor oder in Bezug auf einer Mittellängsachse des Radstandes befindet.

## Revendications

1. Véhicule à enfourcher à 2 ou 3 roues pour le transport d'une cargaison, comprenant :
- un ensemble de siège (18) ;
- un jeu de roues (16) comprenant au moins une roue avant et au moins une roue arrière ;
- un châssis de maintien de cargaison (14) qui est une ossature située devant ledit ensemble de siège (18), ledit ensemble de siège (18) étant espacé dudit châssis de maintien de cargaison (14), en ce que ledit ensemble de siège (18) est situé fonctionnellement derrière ledit châssis de maintien de cargaison (14) ; et
un ensemble de direction (12), sur le dessus dudit châssis de maintien de cargaison (14), ledit ensemble de direction (12) étant prévu en une formation espacée, en ce qu'une poignée de direction (12a) est décalée latéralement de ladite roue avant, dans lequel,
- la poignée de direction déplaçable angulairement (12a) est capable d'un déplacement angulaire autour de l'axe longitudinal fonctionnel de ladite poignée de direction (12a) ; **caractérisé en ce que** ledit ensemble de direction (12) comprend :
- un premier pignon (12c) aligné et concentrique à l'axe de déplacement angulaire de ladite poignée de direction (12a) ;
- un deuxième pignon (12d) ;
- une crémaillère (12b) couplée audit premier pignon (12c) à sa première extrémité et audit deuxième pignon (12d) à son autre extrémité ;
- une première barre de direction (12e), décalée latéralement de ladite poignée de direction (12a), serrée par une première colonne de direction (12i), ladite première barre de direction (12e) étant couplée audit deuxième pignon (12d) ;
- une deuxième barre de direction (12f) serrée par une deuxième colonne de direction (12j), ladite première barre de direction (12e) et ladite deuxième barre de direction (12f) étant montées à un angle l'une par rapport à l'autre ;
- un joint de Cardan (12k) configuré pour coupler ladite première barre de direction (12e) à ladite deuxième barre de direction (12f) ;
- une poignée T (12g) connectée à ladite deuxième barre de direction (12f) ; et
- une suspension avant télescopique (12h) montée sur ladite poignée T (12g).

2. Véhicule à enfourcher à 2 ou 3 roues pour le transport d'une cargaison tel que revendiqué en revendication 1, dans lequel ledit châssis de maintien de cargaison a une base de ladite zone de maintien de cargaison qui s'incline depuis la roue avant fonctionnelle en direction de la roue arrière fonctionnelle.

3. Véhicule à enfourcher à 2 ou 3 roues pour le transport d'une cargaison tel que revendiqué en revendication 1, dans lequel ledit châssis de maintien de cargaison comprenant :
- au moins deux éléments longitudinaux supérieurs (22a, 22b) configurés le long de l'axe de progression du véhicule et au moins deux éléments latéraux supérieurs (22c, 22d) configurés orthogonaux à l'axe de progression du véhicule, les deux éléments longitudinaux supérieurs et les deux éléments latéraux supérieurs forment une partie supérieure du châssis ;
- au moins deux éléments longitudinaux inférieurs (24a, 24b) configurés le long de l'axe de progression du véhicule et au moins deux éléments latéraux inférieurs (24c, 24d) configurés orthogonaux à l'axe de progression du véhicule, les deux éléments longitudinaux inférieurs et les deux éléments latéraux inférieurs forment une partie inférieure du châssis ; et
- la partie supérieure du châssis est espacée de la partie inférieure du châssis au moyen d'éléments verticaux fonctionnels (26a, 26b, 26c, 26d) ;
les deux éléments longitudinaux supérieurs et les deux éléments latéraux supérieurs formant un trapèze (23a) ou un rectangle (23b).

4. Véhicule à enfourcher à 2 ou 3 roues pour le transport d'une cargaison tel que revendiqué en revendication 1, dans lequel ladite poignée de direction dudit ensemble de direction est décalée par rapport à un axe longitudinal de ladite roue avant fonctionnelle du jeu de roues.

5. Véhicule à enfourcher à 2 ou 3 roues pour le transport d'une cargaison tel que revendiqué en revendication 1, dans lequel ladite crémaillère est alignée le long de l'axe de progression dudit véhicule.

6. Véhicule à enfourcher à 2 ou 3 roues pour le transport d'une cargaison tel que revendiqué en revendication 1, dans lequel le centre de gravité, dudit véhicule, est fonctionnellement vers l'avant par rapport à un pilote, ledit centre de gravité se situe dans une région triangulaire prédéfinie - où les 3 sommets sont : 1) un point sur l'axe de la poignée de direction ; 2) un point sur l'essieu arrière ; et 3) un point sur une ligne imaginaire passant par le centre de l'empattement en croisant la partie inférieure du châssis.

7. Véhicule à enfourcher à 2 ou 3 roues pour le transport d'une cargaison tel que revendiqué en revendication 1, dans lequel le centre de gravité, dudit véhicule, est fonctionnellement vers l'avant par rapport à un pilote, ledit centre de gravité étant défini par un premier lieu géométrique de points limité, au niveau d'un côté avant fonctionnel, par un axe central, de l'empattement, et un deuxième lieu géométrique de points limité, au niveau d'un côté arrière fonctionnel, par la jambe d'un pilote sur le siège du véhicule.

8. Véhicule à enfourcher à 2 ou 3 roues pour le transport d'une cargaison tel que revendiqué en revendication 1, dans lequel le centre de gravité, dudit véhicule, est fonctionnellement vers l'avant par rapport à un pilote, ledit centre de gravité étant défini au sein d'un premier triangle, dans un plan x et un plan y, ledit premier triangle dudit centre de gravité est défini par un point sur l'essieu arrière, un point sur la poignée de direction, et soit un point sur le point le plus en avant du châssis de maintien de cargaison.

9. Véhicule à enfourcher à 2 ou 3 roues pour le transport d'une cargaison tel que revendiqué en revendication 1, dans lequel le centre de gravité, dudit véhicule, est fonctionnellement vers l'avant par rapport à un pilote, ledit centre de gravité étant défini au sein d'un deuxième triangle, dans un plan z ; ou **caractérisé en ce que** ledit centre de gravité est défini au sein d'un deuxième triangle, dans un plan z, ledit deuxième triangle du centre de gravité étant défini par un point sur une extrémité de la poignée de direction, un point sur l'autre extrémité de la poignée de direction poignée et un point sur l'axe longitudinal de l'essieu arrière.

10. Véhicule à enfourcher à 2 ou 3 roues pour le transport d'une cargaison tel que revendiqué en revendication 1, dans lequel le centre de gravité, dudit véhicule, est fonctionnellement vers l'avant par rapport à un pilote, ledit centre de gravité étant défini au sein d'un deuxième triangle, dans un plan z, ledit deuxième triangle du centre de gravité étant défini par un point sur une extrémité de l'axe latéral défini au centre de l'empattement du véhicule, un point sur l'autre extrémité de l'axe latéral défini au centre de l'empattement du véhicule et un point sur l'axe longitudinal de l'essieu arrière.

11. Véhicule à enfourcher à 2 ou 3 roues pour le transport d'une cargaison tel que revendiqué en revendication 1, dans lequel ladite poignée de direction est située proche d'une ligne de centre de gravité dans des conditions chargée ainsi que déchargée, ladite poignée de direction étant située avant, ou au niveau de, par rapport à un axe longitudinal central de l'empattement.
